# EUROPEAN PATENT SPECIFICATION

(11) **EP 1 431 153 B1**
(45) Date of publication and mention of the grant of the patent: **12.10.2005**
(21) Application number: 03028816.1
(22) Date of filing: 15.12.2003
(51) Int. Cl.: B60T 17/00, B60T 17/04

(54) **Compressed air processing equipment for lorries**
Druckluftaufbereitungsanlage für Lastkraftwagen
Appareil de traitement d'air comprimé pour camions

(30) Priority: 16.12.2002 DE 10259024
(43) Date of publication of application: 23.06.2004
(73) Proprietor: IVECO MAGIRUS AG, D-89079 Ulm (DE)
(72) Inventor: Distelrath, Heinz, Peter, 89079 Ulm (DE); Pohl, Harald, 89155 Erbach (DE)
(74) Representative: Gervasi, Gemma

(56) References cited:
- WO-A-02/074422
- DE-A- 19 623 845
- FR-A- 2 798 345

## Description

The present invention refers to a compressed air processing equipment for lorries according to the preamble of Claim 1, as disclosed in WO 02/074422.

Compressed air processing equipment of the type mentioned by way of introduction is used to clean the compressed air required for the operation of a lorry from dirt and oil particles, to dry it and distribute it to compressed air consumers for example the braking system.

The expression "lorry" applies here equally to buses, tractors and other vehicles with compressed air systems.

Such equipment is generally mounted in the substructure or chassis of the vehicle, for example on a suitable vertical face like the battery casing. The supply and return of the compressed air to and from the compressed air processing equipment takes place by means of a number of compressed air connections, normally mounted laterally on a flat surface of the equipment housing. A number of compressed air pipes are attached to these compressed air connectors through a coupling plate which is used to establish couplings between the compressed air connectors and the compressed air pipes. The coupling plate thus represents an adapter to simplify the coupling procedure. In particular, simple push-on couplings can be mounted on the coupling plate which reduce the assembly effort in coupling.

On account of existing vehicle frame supports in the chassis, it is often a problem to run the compressed air pipes directly from the coupling plate to the respective consumer. If there is such a support directly between the compressed air processing equipment and the consumer, the group of pipes must either be run under the support or through an aperture in the support. In the former case there exists the danger that the pipes lying exposed under the support will be damaged. The second option requires a suitably large cut-out to be available in the cross piece of the support, which is undesirable for reasons of design or construction.

In either case, access to the coupling plate remains restricted by the arrangement of the support in front of it. The coupling of the compressed air pipes to the coupling plate thereby becomes a very complicated and time-consuming procedure. In addition, a flange-like mounting support fixed laterally to the equipment housing is, as a rule, necessary in order to attach the equipment to the mounting surface. This leads to additional constructional effort.

The scope of the present invention is therefore to produce a compressed air processing equipment of the type mentioned by way of introduction which is easier to install than known equipment and by means of which a better optimised installation and a more convenient connection of the compressed air pipes to the coupling plate can be achieved.

This scope is achieved according to the invention by means of a compressed air processing equipment with the features of Claim 1.

The coupling plate of the compressed air processing equipment according to the invention is not fixed directly to the flat surface of the equipment housing on which the compressed air connectors are provided for, but the surface furnished with the connections and the coupling plate are mounted in corresponding positions on opposite sides of a chassis support. The connection between the compressed air connectors and the coupling plate is achieved by means of connecting tubes which project through corresponding apertures in the support. The distance between the coupling plate and the connection surface of the equipment, due to the presence of the intermediate support, is thus bridged by the connecting tubes.

The coupling plate can consequently be arranged on the side of the support which is easily accessible so that the coupling of the compressed air pipes to the coupling plate is facilitated whilst the compressed air processing equipment itself is in a protected position on the opposite side of the support. Alternatively, the equipment housing can be mounted externally so that it is easily accessible for maintenance work and the like. The connection of the compressed air pipes is also facilitated in this case, as access is not impeded by the support. A larger cut-out in the support is not necessary as merely smaller individual holes, into which the connecting tubes can be inserted, are sufficient. This arrangement also avoids running the pipes under the support so that the danger of damaging the pipes is decreased.

The support concerned is preferably a frame side member. Further, the compressed air processing equipment according to the invention preferably includes additional mounting fixtures for connecting the coupling plate to the equipment housing. Such additional fixtures are above all to be recommended when mounting relatively heavy equipment, so that the weight is taken off the connecting tubes. The additional fixtures concerned are preferably threaded studs which are fixed to the equipment housing and project through the support and coupling plate. Nuts are screwed on to the ends of these studs, which allow the coupling plate to be tightened on to the support.

In a preferred embodiment, the connecting tubes together with a complementary pipe end fitting form a connector. The connecting tube can therefore either be inserted into the pipe end fitting, or the pipe end fitting can conversely be inserted into the connecting tube. The connections produced this way can preferably include sealing rings e.g. O-rings.

The connecting tubes preferably originate from the coupling plate and the compressed air connectors form the pipe end fittings for inserting the connecting tubes.

In a preferred embodiment, the connecting tubes are formed by the end pieces of tubular connectors which entirely project through holes in the coupling plate. On the side of the coupling plate facing away from the support these connectors are fitted with couplings for connection to the corresponding compressed air pipes. The plate itself is furnished in this case with through-holes which contain the connectors.

In a further embodiment, the coupling plate is furnished with passageways which themselves form compressed air channels, at one end leading into the connecting tubes attached to the coupling plate and at the other end allowing engagement of the compressed air pipes. The apertures intended for engagement can either be on the side of the plate facing away from the support or on a side of the plate perpendicular to the support resulting in a right-angled passageway within the plate.

In the following, examples of preferred embodiments of the invention are explained in more detail using the appended drawing.
Fig. 1 is a perspective representation of a compressed air processing equipment according to the invention in the non-mounted condition;
Fig. 2 shows the compressed air processing equipment of Fig. 1 mounted on a frame side member together with the coupling plate;
Fig. 3 shows a further embodiment of the compressed air processing equipment according to the invention from a perspective corresponding to Fig. 1;
Fig. 4 shows the compressed air processing equipment of Fig. 3 in an installed position corresponding to Fig. 2

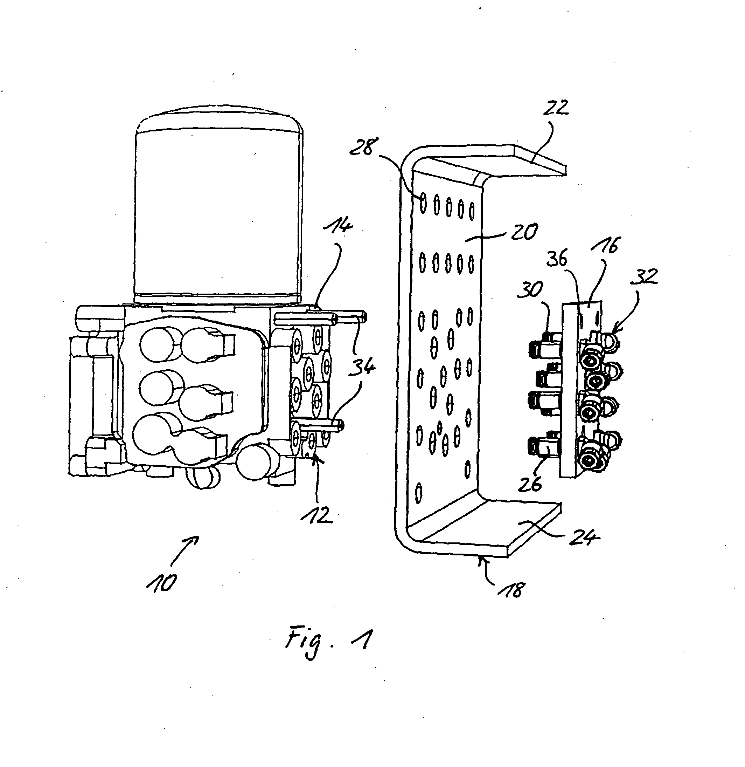

The compressed air processing equipment shown in Fig. 1 comprises an equipment housing 10 which contains devices for the processing and distribution of the compressed air introduced into the equipment. The compressed air processing equipment is particularly suited to the cleaning and drying of compressed air.

For the introduction of the compressed air, the equipment housing 10 includes a number of compressed air connections 12 which are mounted on a flat housing surface 14 provided on the right hand side of the equipment housing 10 shown in Fig. 1. The remaining exterior surfaces of the equipment can include further devices like maintenance connectors or similar which constitute a secondary aspect of the invention whose description is dispensed with here.

A coupling plate 16 serves to provide coupling connections between the compressed air connections 12 on the equipment housing 10 and the compressed air pipes (not shown) which lead to a compressed air consumer e.g. a braking system.

The housing 10 and the coupling plate 16 are to be attached on opposite sides of a chassis support 18. For the sake of clarity only a section of this support 18 is shown in Fig. 1. Here a C-section is considered on whose vertical middle section 20, from which protrude horizontal upper and lower projections 22, 24 respectively, are mounted the housing 10 and the coupling plate 16 in such a way that they butt flat against the support 18.

The connection between the coupling plate 16 and the compressed air connections 12 is achieved by means of connecting tubes 26 which project from the side of the coupling plate 16 facing the support 18. The support 18 has a number of holes 28 in order to allow the penetration of the connecting tubes 26. In the case under consideration the number of holes 28 is greater than the number of connecting tubes 26 enabling the optional possibility of other arrangements for mounting the coupling plate 16 and the connecting tubes 26 on the support 18. The pattern of the holes 28 can thus be varied according to the arrangement of the connecting tubes.

The ends of the connecting tubes 26 are designed to be inserted into the compressed air connections 12. For this purpose the compressed air connections 12 are formed as pipe end fittings whose internal diameter corresponds the external diameter of the connecting tubes 26. These connections can be pressure sealed by means of O-rings 30, fitted to and encompassing the ends of the connecting tubes 26.

The connecting tubes 26 are formed by the ends of tubular connectors 32 which are passed through the corresponding holes in the coupling plate 16. The ends of the connectors 32, facing away from the connecting tubes 26, are furnished with ports for the connection of the compressed air pipes, so that each connector 32 serves as an adapter connecting the compressed air pipes (not shown) to the compressed air connections 12.

In the case under consideration, the connectors 32 are elbow connectors by means of which the compressed air pipes are coupled to the elbow connectors 32 in a direction perpendicular to the direction of insertion of the connecting tubes 26.

Additional threaded studs 34 are attached to the equipment housing 10, protruding from the flat housing surface 14, in order to guarantee a secure mounting of the relatively heavy compressed air processing equipment to the support 18. During assembly, these threaded studs 34 can be inserted through the corresponding apertures 28 in the support 18. The coupling plate 16 also has holes 36 through which the ends of the threaded studs 34 can be inserted when mounting the coupling plate 16. In the fully attached state, nuts 38 are screwed onto the free ends of the coupling plate 16 which are then successively tightened so that a secure contact is achieved.

It is clearly possible to design the connection between the compressed air connections 12 and the connecting tubes 26 so that the compressed air connections 12 include pipe end fittings which accept the connecting tubes 26. It is further possible to design the compressed air connections 12 themselves as connecting tubes which pass through the support 18 and form a connection with the corresponding pipe end fittings attached to the coupling plate 16.

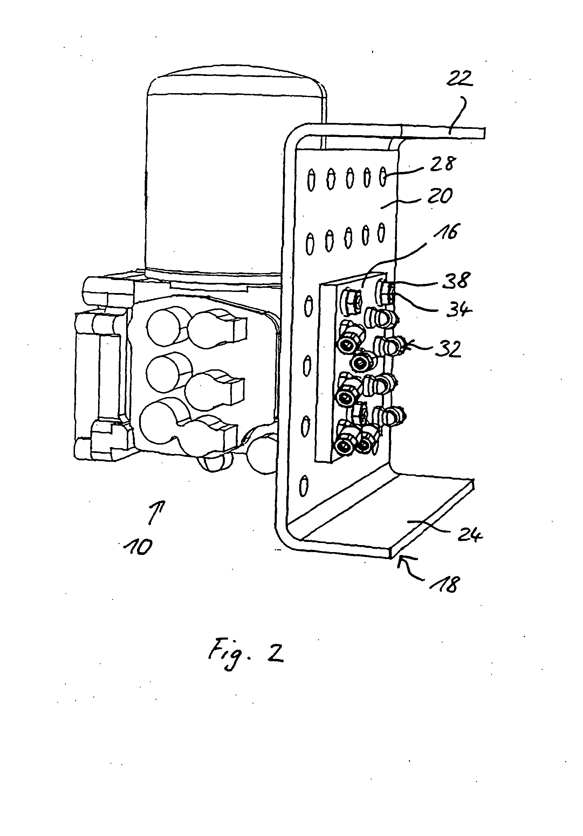

Fig. 2 shows the equipment housing 10 and the coupling plate 16 in the assembled state in which both butt against opposite sides of the vertical section 20 of the support 18. In this representation the nuts 38 can be seen which are screwed on to the ends of the threaded studs 34, thereby guaranteeing a secure attachment. The side of support 18 visible in Figs. 1 and 2 can represent the inner side of a frame side member of a lorry chassis. In this case the equipment housing 10 of the compressed air processing equipment is easily accessible on the outer side of the frame while the couplings for connection of the compressed air pipes are arranged on the coupling plate 16 on the inner side of the support 18. The reverse arrangement of the equipment housing 10 and the coupling plate 16 on the support 18 can also be considered, whereby the coupling plate 16 is located on the outside thus making the couplings more easily accessible. In each case a more convenient assembly and better optimised installation of the pipes are made possible, as opposed to known compressed air processing equipment whose connections are located together with the equipment housing behind the support 18. Moreover, it is advantageous that the mounting fixtures, i.e. the threaded studs 34 and the nuts 38, and the compressed air connections 12 are located on the same housing surface, as this way the assembly effort can be reduced.

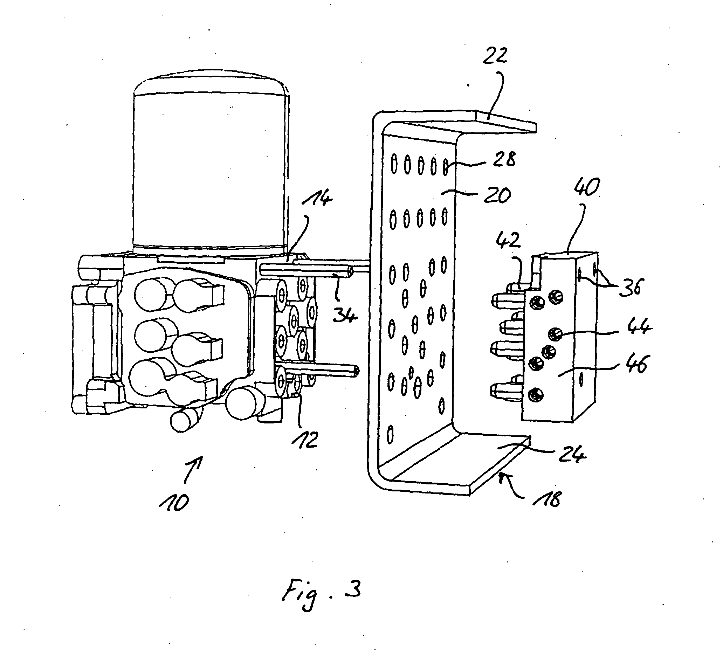

The equipment housing 10 shown in Fig. 3 corresponds to those in Figs. 1 and 2, so that a repetition of the description of the details of the equipment housing can be dispensed with here. The coupling plate 40 is however designed differently in the embodiment depicted here. It comprises likewise a number of connecting tubes 42 which are designed to pass through the holes 28 in support 18 and to be inserted into the compressed air connections 12 of the housing 10. These connecting tubes 42 are however not part of elbow connectors 32, as in the case of Figs. 1 and 2, but the connecting tubes 42 are designed in one piece with the coupling plate 40 and represent the ends of compressed air channels which run through the coupling plate 40. These compressed air channels are formed by passageways 44 in the plate block leading at one end into the connecting tubes 42 and at the other end leading into a lateral surface 46 of the coupling plate 40 which is perpendicular to the surface of the support 18. The apertures of the passageways 44 arranged on the lateral surface 46 are furnished with suitable fixtures which make possible the coupling of the compressed air pipes into the apertures. A similar layout of the compressed air pipes is achieved with this arrangement as with the elbow connectors 32 of Figs. 1 and 2.

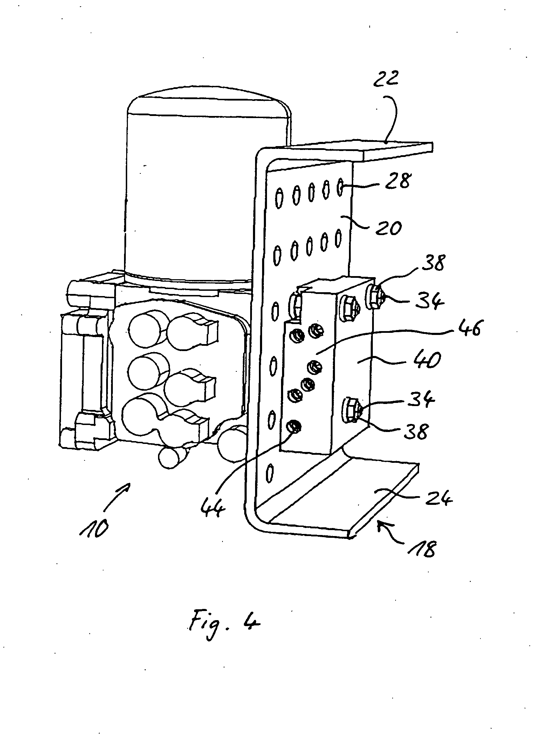

Moreover the coupling plate 40 is furnished with the apertures 36 already noted in the description of the preceding embodiment through which the ends of the threaded studs 34 are inserted. In the fully assembled position, shown in Fig. 4, the coupling plate 40 butts against one side and the flat surface 14 of the equipment housing 10 against the other side of the support 18. This arrangement is held together by means of the nuts 38 screwed on to the threaded studs 34.

The compressed air processing equipment according to the invention is not only suitable for use in lorries in the narrowest sense, but can also be employed in related types of vehicles such as building vehicles and the like.

## Claims

1. Compressed air processing equipment for lorries which is mountable in the sub-structure of a vehicle and comprises a number of compressed air connections (12) which are attached to a flat external surface (14) of the equipment housing (10), as well as a coupling plate (16,40) attached to the compressed air connections (12) for the establishment of couplings between the compressed air connections (12) and a number of compressed air pipes, **characterised in that** the surface (14) of the equipment housing (10), furnished with the compressed air connections (12), and the coupling plate (16,40) are mountable in identical positions on opposite sides of a chassis support (18) and that a number of connecting tubes (26,42) for connecting the coupling plate (16,40) to the compressed air connections (12) are provided on the coupling plate (16,40) which project -when mounted- through corresponding apertures (28) in the support.

2. Compressed air processing equipment according to Claim 1, **characterised in that** the support (18) is a frame side member of the vehicle chassis.

3. Compressed air processing equipment according to Claim 1 or 2, **characterised by** additional mounting fixtures for connecting the coupling plate (16,40) to the equipment housing (10).

4. Compressed air processing equipment according to Claim 3, **characterised in that** the mounting fixtures comprise threaded studs (34) which are attached to the equipment housing (10) and project when mounted- through the support (18) and the coupling plate (16,40), as well as the nuts (38) screwed on to the threaded studs (34).

5. Compressed air processing equipment according to one of the preceding claims, **characterised in that** the connecting tubes (26,42) form connections with respective complementary pipe end fittings.

6. Compressed air processing equipment according to Claim 5, **characterised in that** the connections include sealing rings (30).

7. Compressed air processing equipment according to Claim 5 or 6, **characterised in that** the connecting tubes (26,42) originate from the coupling plate (16,40) and that the compressed air connections (12) are designed as pipe end fittings to accept the connecting tubes (26).

8. Compressed air processing equipment according to Claim 7, **characterised in that** the connecting tubes (26) are formed by the ends of tubular connectors which project through holes in the coupling plate (16) and, on the side of the coupling plate (16) facing away from the connecting tubes (26), are provided with couplings to connect the compressed air pipes.

9. Compressed air processing equipment according to Claim 7, **characterised in that** the coupling plate (40) is provided with passageways (44) for the formation of compressed air channels leading at one end into the connecting tubes 42 and into which, at the other end, the compressed air pipes can be coupled.

## Patentansprüche

1. Druckluftaufbereitungsgerät für Lastkraftwagen, das im Unterbau eines Fahrzeuges montierbar ist und eine Anzahl von Druckluftanschlüssen (12), die an einer ebenen äußeren Fläche (14) des Gerätegehäuses (10) angebracht sind, sowie eine an den Druckluftanschlüssen (12) angebrachte Kupplungsplatte (16,40) zur Schaffung von Kupplungsverbindungen zwischen den Druckluftanschlüssen (12) und einer Anzahl von Druckluftleitungen umfasst, **dadurch gekennzeichnet, dass** die mit den Druckluftanschlüssen (12) versehene Fläche (14) des Gerätegehäuses (10) und die Kupplungsplatte (16,40) in übereinstimmenden Positionen unmittelbar an den gegenüberliegenden Seiten eines Trägers (18) des Fahrzeugrahmens angebracht werden können und dass zum Anschluß der Kupplungsplatte (16,40) an die Druckluftanschlüsse (12) eine Anzahl von Rohrstutzen (26,42) an der Kupplungsplatte (16,40) vorgesehen ist, die - nach Montage - durch entsprechende Öffnungen (28) im Träger (18) hindurchragen.

2. Druckluftaufbereitungsgerät gemäß Anspruch 1, **dadurch gekennzeichnet, dass** der Träger (18) ein Längsträger des Fahrzeugrahmens ist.

3. Druckluftaufbereitungsgerät gemäß Anspruch 1 oder 2, **gekennzeichnet durch** zusätzliche Befestigungseinrichtungen zur Verbindung der Kupplungsplatte (16,40) mit dem Gerätegehäuse (10).

4. Druckluftaufbereitungsgerät gemäß Anspruch 3, **dadurch gekennzeichnet, dass** die Befestigungseinrichtungen Gewindestifte (34) umfassen, die am Gerätegehäuse (10) angebracht sind und - nach Montage - durch den Träger (18) und die Kupplungsplatte (16,40) hindurchragen, sowie auf die Gewindestifte (34) aufgeschraubte Muttern (38).

5. Druckluftaufbereitungsgerät gemäß einem der vorhergehenden Ansprüche, **dadurch gekennzeichnet, dass** die Rohrstutzen (26,42) zusammen mit jeweils komplementären Leitungsendstücken Steckverbindungen bilden.

6. Druckluftaufbereitungsgerät gemäß Anspruch 5, **dadurch gekennzeichnet, dass** die Steckverbindungen Dichtungsringe (30) umfassen.

7. Druckluftaufbereitungsgerät gemäß Anspruch 5 oder 6, **dadurch gekennzeichnet, dass** die Rohrstutzen (26,42) von der Kupplungsplatte (16,40) ausgehen und die Druckluftanschlüsse (12) als Leitungsendstücke zur Aufnahme der Rohrstutzen (26) ausgebildet sind.

8. Druckluftaufbereitungsgerät gemäß Anspruch 7, **dadurch gekennzeichnet, dass** die Rohrstutzen (26) durch die Enden von rohrförmigen Steckverbindern (32) gebildet werden, die durch Bohrungen in der Kupplungsplatte (16) hindurchragen und auf der den Rohrstutzen (26) gegenüberliegenden Seite der Kupplungsplatte (16) mit Kupplungen zum Anschluß der Druckluftleitungen versehen sind.

9. Druckluftaufbereitungsgerät gemäß Anspruch 7, **dadurch gekennzeichnet, dass** die Kupplungsplatte (40) mit Bohrungen (44) zur Bildung von Druckluftkanälen versehen ist, die einerseits in die Rohrstutzen (42) münden und in welche sich andererseits die Druckluftleitungen einkuppeln lassen.

## Revendications

1. Appareil de traitement d'air comprimé pour camions qui peut être monté sur l'infrastructure d'un véhicule et comprend un certain nombre de connexions d'air comprimé (12) qui sont fixées sur une surface extérieure plane du boîtier de l'appareil (10), également une plaque de raccordement (16, 40) fixée aux connexions d'air comprimé (12) pour l'établissement de liaisons entre les connexions d'air comprimé (12) et un certain nombre de tuyaux d'air comprimé , **caractérisé en ce que** la surface (14) du boîtier de l'appareil (10), munie des connexions d'air comprimé (12), et la plaque de raccordement (16, 40) peuvent être montées en des localisations identiques sur les faces opposées d'un support de châssis (18) et **en ce qu'**un certain nombre de tubes de liaison (26, 42) pour la connexion de la plaque de raccordement (16, 40) aux connexions d'air comprimé (12) équipent la plaque de raccordement (16, 40), lesquels, lorsqu'ils sont montés, font saillie au travers d'orifices correspondants (28) dans le support.

2. Appareil de traitement d'air comprimé selon la revendication 1, **caractérisé en ce que** le support (18) est un élément de cadre latéral du châssis du véhicule.

3. Appareil de traitement d'air comprimé selon la revendication 1 ou 2, **caractérisé par** des fixations de montage supplémentaires pour la connexion de la plaque de raccordement au boîtier de l'appareil (10).

4. Appareil de traitement d'air comprimé selon la revendication 3, **caractérisé en ce que** les fixations de montage comprennent des goujons filetés qui sont fixés au boîtier de l'appareil (10) et font saillie, lorsqu'ils sont montés, au travers du support (18) et de la plaque de raccordement (16, 40), et également les écrous (38) vissés sur les goujons filetés (34).

5. Appareil de traitement d'air comprimé selon l'une quelconque des revendications précédentes, **caractérisé en ce que** les tubes de liaison (26, 42) établissent des connexions avec des raccords de tuyauterie terminaux respectivement correspondants.

6. Appareil de traitement d'air comprimé selon la revendication 5, **caractérisé en ce que** les connexions comportent des joints annulaires d'étanchéité (30).

7. Appareil de traitement d'air comprimé selon la revendication 5 ou 6, **caractérisé en ce que** les tubes de liaison (26, 42) prennent leur départ de la plaque de raccordement (16, 40) et **en ce que** les connexions d'air comprimé (12) sont conçues comme des raccords terminaux de tuyauterie de façon à recevoir les tubes de liaison (26).

8. Appareil de traitement d'air comprimé selon la revendication 7, **caractérisé en ce que** les tubes de liaison (26) sont formés par les extrémités de connecteurs tubulaires qui font saillie au travers de trous dans la plaque de raccordement (16) et qui, sur le côté de la plaque de raccordement (16) opposé aux tubes de liaison (26), sont munis de raccordements pour le branchement des tuyaux d'air comprimé.

9. Appareil de traitement d'air comprimé selon la revendication 7, **caractérisé en ce que** la plaque de raccordement (40) est munie de voies de passage (44) pour former des canaux d'air comprimé qui aboutissent par une extrémité aux tubes de liaison (42) et dans lesquels, à l'autre extrémité, peuvent être branchés les tuyaux d'air comprimé.
